# EUROPEAN PATENT SPECIFICATION

(11) **EP 4 561 008 B1**
(45) Date of publication and mention of the grant of the patent: **05.11.2025**
(21) Application number: 23212056.8
(22) Date of filing: 24.11.2023
(51) Int. Cl.: H04L 45/00, H04L 45/24, H04L 45/302, H04W 28/02, H04W 28/08

(54) **METHOD, COMPUTER PROGRAM, AND APPARATUS FOR MAINTAINING QUALITY OF SERVICE IN A MULTI-PATH COMMUNICATION SESSION**
VERFAHREN, COMPUTERPROGRAMM UND VORRICHTUNG ZUR AUFRECHTERHALTUNG DER DIENSTQUALITÄT IN EINER MEHRWEG-KOMMUNIKATIONSSITZUNG
PROCÉDÉ, PROGRAMME INFORMATIQUE ET APPAREIL POUR MAINTENIR LA QUALITÉ DE SERVICE DANS UNE SESSION DE COMMUNICATION À TRAJETS MULTIPLES

(43) Date of publication of application: 28.05.2025
(73) Proprietor: Deutsche Telekom AG, 53113 Bonn (DE)
(72) Inventor: AMEND, Markus, 63667 Nidda (DE); BAYER, Nico, 61231 Bad Nauheim (DE)
(74) Representative: 2SPL Patentanwälte PartG mbB

(56) References cited:
- WO-A1-2022/098696
- US-A1- 2020 404 609
- US-A1- 2022 361 038
- "3rd Generation Partnership Project; Technical Specification Group Services and System Aspects; System architecture for the 5G System (5GS); Stage 2 (Release 18)", 31 March 2023 (2023-03-31), XP052454774, Retrieved from the Internet <URL:https://ftp.3gpp.org/tsg_sa/WG2_Arch/Latest_SA2_Specs/DRAFT_INTERIM/Archive/23501-i10_CRs_Implemented_rev5.zip 23501-i10_CRs_Implemented_rev5.docx> [retrieved on 20230331]
- COGALAN TEZCAN ET AL: "Enhanced Access Traffic Steering Splitting Switching with Utility-Based Decisioning", 2022 IEEE CONFERENCE ON STANDARDS FOR COMMUNICATIONS AND NETWORKING (CSCN), IEEE, 28 November 2022 (2022-11-28), pages 138 - 143, XP034301423, DOI: 10.1109/CSCN57023.2022.10050977

## Description

### Field

Examples relate to a method, a computer program, and an apparatus for maintaining Quality of Service (QoS) in a multi-path communication session between two communication nodes in a communication network, more particularly, but not exclusively, to a concept for compensating QoS degradations of individual paths in a multi-path communication session.

### Background

When transmitting data in communication networks, data rate, error rate and latency are key performance indicators. For example, data of some services may be more delay tolerant than others. Email traffic or web browsing are examples of rather delay-tolerant services. Other data services may be rather delay-intolerant, such as communication-class services as voice and video calls. Similar diversity exists with respect to error tolerance. QoS maintenance can therefore be critical for some services and for user experience.

Hybrid Access is a technology that combines different internet access connections, e.g., via landline and mobile communications, to a common network connection. A similar technology is the 3GPP (3^{rd} Generation Partnership Project) ATSSS (Access Traffic Steering, Switching, and Splitting), which specifies the usage of a 3GPP and a non-3GPP access and can be used for the purpose of Hybrid Access but also the combination of e.g., Wi-Fi (Wireless Fidelity) and 5G (5^{th} Generation mobile communication system) in a UE (User Equipment, e.g. a smartphone). The goal is to use the bandwidth of several available network connections at the same time and thus improve the reliability of the internet connection. It is a technology to strengthen broadband deployment initiatives, particularly in underserved rural areas.

Typically, a DSL (Digital Subscriber Line)/Wi-Fi connection is combined with a cellular connection - called Hybrid Access. Traffic is then steered or routed via multiple paths using different access technologies.

Document WO 2022/098696 A1 describes a user equipment (UE) and a network, which may communicate to dynamically adapt the steering of traffic over both 3GPP and non-3GPP accesses for uplink, downlink, or both. For example, a UE may request from the network the ability to dynamically adapt uplink traffic, and the network may also apply the same traffic adaptation on downlink traffic. The UE and network may communicate dynamic traffic adaptation using traffic steering rules, e.g., via control plane NAS protocol, and with user plane signaling, e.g., via user plane PMF protocol.

Document US 2020/0404609 A1 discloses a method of handling Multi-Access (MA) Protocol Data Unit (PDU) session under inter-system change. An MAPDU session uses one 3GPP access network or one non-3GPP access network at a time, or simultaneously one 3GPP access network and one non-3GPP access network. The UE and network can support Access Traffic Steering Switching and Splitting (ATSSS) functionalities to distribute traffic over 3GPP access and non-3GPP access for the established MAPDU session. Upon intersystem change from 5GS to EPS over the 3GPP access, if interworking with EPS is not supported, the MAPDU session is maintained in 5GS over the non-3GPP access type. Data traffic of the MAPDU session over the 3GPP access type is transferred to the non-3GPP access type.

Document US 2022/0361038 A1 relates to a 5th Generation (5G) or 6th Generation (6G) communication system for supporting a higher data transmission rate. A method performed by a session management function (SMF) entity in a wireless communication system is provided. The method includes transmitting, to a user plane function (UPF) entity, information indicating a list of Quality of Service (QoS) flows over which access performance measurements are to be performed, receiving, from the UPF entity, information indicating User Datagram Protocol (UDP) ports allocated for the QoS flows, and transmitting, to a user equipment (UE), information including the list of QoS flows and the UDP ports.

### Summary

It is a finding of the present disclosure that in order not to negatively impact the regular mobile broadband customer, Hybrid Access traffic within a cellular network might be treated with a lower priority, also referred to as "iron class". A drawback of this approach might be that in case of the absence of the DSL/Wi-Fi connection, the connectivity of the customer relies on the cellular path in which traffic is treated with low priority. Hence, in case of overloaded cells, the customer would experience very low performance, leading to a bad user experience. This is because the Hybrid Access traffic is treated with lower priority (iron class) compared with the regular MBB (Mobile Broadband) customers. It therefore a finding that priority of a service for a hybrid access user should be adaptive to the load or general traffic conditions on the communication paths used. Therefore, the provided QoS on a communication path in a multi-path communication scenario should be adapted to the load or traffic conditions on one or more other paths in the multi-path communication scenario.

Examples provide a method for maintaining Quality of Service, QoS, in a multi-path communication session between two communication nodes in a communication network. The multi-path communication session comprises at least first and second communication paths. The method comprises monitoring a provided QoS on the second communication path and adapting a provided QoS on the first communication path based on the provided QoS on the second communication path. Examples may enable compensation of QoS degradations on the second communication path by adapting a provided QoS on the first communication path accordingly.

For example, the first and second communication paths use different access technologies in the communication network. For instance, the first communication path may use wireless access and the second communication path may use wired access. In other examples the first and second communication paths may use different radio access technologies, such as 3GPP, Wi-Fi, satellite etc. Examples may enable QoS compensation, which can be between different access technologies, or different communication paths, even if they use the same access technology (e.g between protocol tunnels).

The adapting of the provided QoS on the first communication path comprises changing a QoS profile associated with the communication on the first communication path. Examples may enable to use and adapt QoS profiles on the first communication path as defined or given by the access technology and/or protocols used on the first communication path. For example, a QoS on the first communication path is increased if the monitoring of the provided QoS on the second communication path indicates that the second communication path is interrupted. Hence, if the second path drops or gets overloaded, the first path may compensate. A QoS on the first communication path may be decreased if the monitoring of the provided QoS on the second communication path indicates that the second communication path is available again after having been interrupted. Examples may enable dynamic QoS adaptation.

In further examples the method may comprise monitoring a provided QoS on the first communication path and adapting a provided QoS on the second communication path based to the provided QoS on the first communication path. Examples may enable mutual QoS compensation between multiple paths. Even further, in some examples the method may comprise monitoring a combined QoS provided via the first and second communication paths and adapting individual QoS provided on the first and second communication paths based on the combined QoS. In principle, examples may monitor an overall QoS experienced by the user and dynamically adapt the underlying load distribution onto multiple communication paths based on their individual capacities.

Furthermore, the method may comprise predicting QoS changes for the second communication path and adapting the provided QoS on the first communication path based on the predicted QoS change for the second communication path. Examples may enable prediction based QoS profile adaptation. The multi-path communication session between the two communication nodes may be a Multi-Access Packet Data Unit, MA-PDU, session in a 3rd Generation Partnership Project Access Traffic Steering, Switching, and Splitting, ATSSS, system. Examples may hence enable dynamic QoS adaption on paths of an ATSSS system. The multi-path communication session between the two communication nodes may be a hybrid access system and/or a multi-path system.

The method may, in further examples, comprise detecting a manipulation of the second communication path and refraining from increasing a provided QoS on the first communication path if a manipulation of the second communication path is detected. Examples may enable countermeasures in case mal use of the QoS compensation mechanism is detected.

Examples also provide a computer program product having a program code for performing one of the methods described herein, when the computer program is executed on a computer, a processor, or a programmable hardware component.

Another embodiment is an apparatus for maintaining Quality of Service, QoS, in a multi-path communication session between two communication nodes in a communication network, the multi-path communication session comprises at least first and second communication paths. The apparatus comprises one or more interfaces configured to communicate in the communication network and one or more processing devices configured to perform one of the methods described herein. User equipment or a network node comprising the apparatus are further examples.

A non-claimed communication system comprising user equipment with an example of an apparatus as described above, one or more access networks and a core network node with example of an apparatus as described above is another example.

The invention is defined by the appended claims

### Brief description of the Figures

Some examples of apparatuses, methods, and/or computer programs will be described in the following by way of example only, and with reference to the accompanying figures, in which
Fig. 1 shows a block diagram of an example of a method for maintaining Quality of Service, QoS, in a multi-path communication session in a communication network;
Fig. 2 shows a block diagram of an apparatus for maintaining Quality of Service, QoS, in a multi-path communication session, an example of user equipment, and an example of a network node;
Fig. 3 shows a block diagram of an example of a MA-PDU session; and
Fig. 4 shows throughput charts in an example of an MA-PDU session with concurrent use of a WiFi path.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

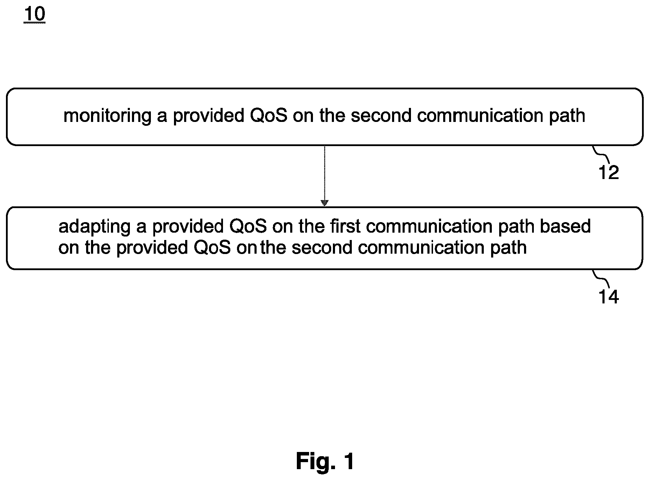

Fig. 1 shows a block diagram of an example of a method 10 for maintaining Quality of Service, QoS, in a multi-path communication session between two communication nodes in a communication network. The multi-path communication session comprises at least a first communication path and a second communication path. The method 10 comprises monitoring 12 a provided QoS on the second communication path and adapting 14 a provided QoS on the first communication path based on the provided QoS on the second communication path. The first and second communication paths may be established subsequently, e.g. the multi-path session may be setup with the first path only the second communication path may be added later on. The provided QoS on a communication path is the QoS that is actually available on the communication path and it can be different from what an assigned QoS profile or requirement for a certain service demands, since the actual QoS (e.g. data rate, error rate, latency) depends on the load and channel conditions of the respective path.

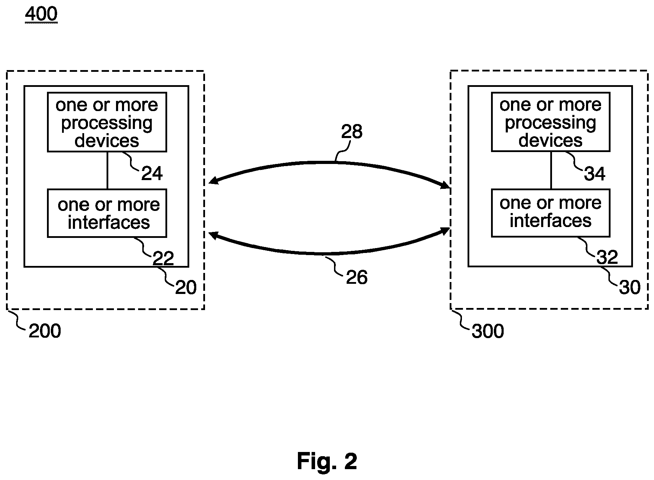

Fig. 2 shows a block diagram of an example of an apparatus 20, 30 for maintaining Quality of Service, QoS, in a multi-path communication session between two communication nodes 200, 300 in a communication network 400. The multi-path communication session comprises at least a first communication path 26 and a second communication path 28. The apparatus 20, 30 comprises one or more interfaces 22, 32 configured to communicate in the communication network 400. The apparatus 20, 30 further comprises one or more processing devices 24, 34 configured to perform one of the methods 10 described herein. Further examples illustrated in Fig. 2 as optionally (using dashed lines) are user equipment 200 comprising an example of the apparatus 20 and a network node 300 (e.g. a core network component) comprising an example of the apparatus 30.

Fig. 2 further illustrates an example of a communication system or network 400 comprising an example of user equipment 200 and an example of a network node.

As illustrated in Fig. 2, the respective one or more processing devices 24, 34 are coupled to the one or more interfaces 22, 32. The one or more interfaces 22, 32 may correspond to one or more inputs and/or outputs for receiving and/or transmitting information, which may be in digital (bit) values according to a specified code or protocol, within a module, between modules or between modules of different entities. For example, an interface 22, 32 may comprise interface circuitry configured to receive and/or transmit information. In examples, an interface 22, 32 may correspond to any means for obtaining, receiving, transmitting or providing analog or digital signals or information, e.g., any connector, contact, pin, register, input port, output port, conductor, lane, etc., which allows providing or obtaining a signal or information. An interface 22, 32 may be configured to communicate (transmit, receive, or both) in a wireless or wireline manner and it may be configured to communicate, i.e., transmit and/or receive signals, information with further internal or external components. The one or more interfaces 22, 32 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. Generally, an interface 22, 32 may be a physical interface (e.g. a WiFi (Wireless Fidelity) interface or a 5G interface) or a virtual interface (e.g. a tunnel endpoint).

The one or more processing devices 24, 34 may be implemented using one or more processing units, one or more circuitries, any means for processing, such as a processor, a computer or a programmable hardware component being operable with accordingly adapted software. In other words, the described function of the one or more processing devices 24, 34 may as well be implemented in software, which is then executed on one or more programmable hardware components. Such hardware components may comprise a general-purpose processor, a Digital Signal Processor (DSP), a micro-controller, etc.

Examples may provide dynamic cellular QoS in multi-path scenarios. Such a dynamic QoS adaption in a regulated first path may reflect the absence of a second path in a multipath setup. The first path may be a cellular path and the second path may be a fixed or Wi-Fi path. In another scenario, the first path is a satellite path and the second path is a cellular/fixed/Wi-Fi path. Generally, in line with the above description of method 10 the first and second communication paths may use different access technologies in the communication network 400. The first communication path may use wireless access and the second communication path may use wired access. In other examples, the first and second communication paths may use different Radio Access Technologies (RATs), such as cellular, WiFi, satellite, etc. or different protocol tunnels. In another example, the same RAT might be used with multiple protocol tunnels as communication paths.

This may have the benefit that a regulated first path in a multipath system becomes less or non-regulated if a second path in a multi-path system is not usable. For proper functionality, this may require a detection mechanism/entity for the absence of the second path, e.g. 3GPP PMF (Performance Measurement Function), a polling mechanism (e.g. ping) or access related information from MSAN (Multi-Service Access Node), BNG (Broadband Network Gateway), AGF (Access Gateway Function), Radio Unit, UE information.

Furthermore, examples may provide a QoS adaptation engine, which is in charge of controlling the QoS level (e.g. via a QoS profile, QoS flow, etc.) of the first path. The adapting 14 of the provided QoS on the first communication path may comprise changing a QoS profile associated with the communication on the first communication path. In case of determined absence by the detection entity, the adaptation engine (apparatus 20, 30 for maintaining QoS) triggers a new QoS indication on the first path. Preferably this increases an existing QoS indication or applies a better QoS than the default one. A QoS on the first communication path is then increased if the monitoring of the provided QoS on the second communication path indicates that the second communication path is interrupted.

Possible technologies, which facilitate QoS indication are DiffServ (differentiated Services), IP ToS (Internet Protocol Type off Service), QCI (QoS Class Identifier), QFI (QoS Flow indicator) or Network Slicing (Slices with different QoS profiles/settings).

For example, diffserv, short for Differentiated Services, is a computer networking architecture that specifies a scalable and flexible approach to manage network traffic and provide QoS on modern IP networks. Diffserv effectively classifies, manages, and directs network traffic by dividing it into different classes based on business requirements. Each class reflects a specific level of service quality. Diffserv uses a field in the IP header for packet classification, enabling routers and switches to assign the appropriate priority to each data packet and forward them according to a predetermined service policy, allowing prioritization of certain types of traffic over others. This makes Diffserv crucial for networks where certain data traffic requires a higher priority, like VoIP (Voice over IP) or streaming media, ensuring high performance and minimizing latency.

Another example is IP ToS, which is a mechanism applied to managing the QoS on networks that deploy IP for data transmission. It is essentially a field in an IP packet's header that allows for packets to be classified and prioritized accordingly for traffic control purposes. This prioritization primarily addresses aspects such as speed, reliability, and security on data networks. By setting particular ToS values, you can effectively control how various network devices handle packets. The IP ToS system has maintained relevance even with the introduction of newer technologies, including Differentiated Services Code Point (DSCP), due to its foundational role in network data handling.

In example, after an absent second path returns, the QoS level of the first path is reduced to a lower value. Preferably the first path QoS level is set to the value, which was applied in the previous period of the present second path. The same technologies as above for changing the QoS level can be used for this. A QoS on the first communication path may be decreased if the monitoring of the provided QoS on the second communication path indicates that the second communication path is available again after having been interrupted. In further examples, the method 10 may comprise monitoring a provided QoS on the first communication path 26 and adapting a provided QoS on the second communication path 28 based to the provided QoS on the first communication path. Hence, at least in some examples the QoS compensation may be mutual among the communication paths.

Another example may address the overall QoS a user experiences in the multi-path communication session. The method 10 may then comprise monitoring a combined QoS provided via the first and second communication paths. Based on the combined QoS, and an overall or combined QoS target, individual QoS provided on the first and second communication paths may be adapted.

In more specific examples, the above method 10 is applied in a 3GPP ATSSS system, a Hybrid Access system, or an end-to-end multipath system. The multi-path communication session between the two communication nodes may then be a Multi-Access Packet Data Unit, MA-PDU, session in a 3rd Generation Partnership Project Access Traffic Steering, Switching, and Splitting, ATSSS, system. Additionally or alternatively, the multi-path communication session between the two communication nodes is a hybrid access system and/or an end-to-end multipath system.

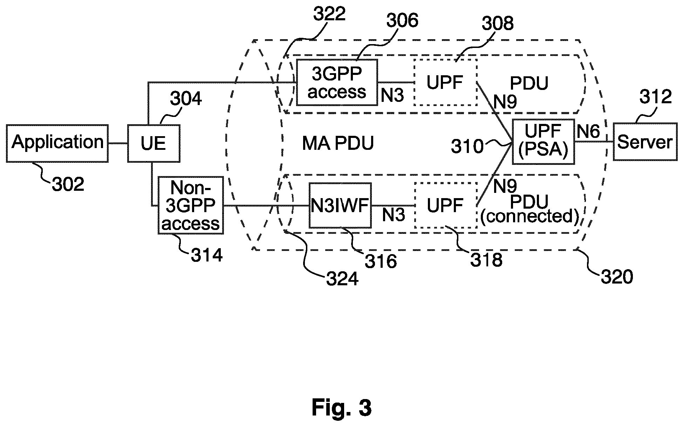

In the case of a 3GPP ATSSS system examples may interact with a MA-PDU session according to Fig. 3 and modify the QoS parameter(s) of the MA-PDU session. This is necessary because so far Technical Specification (TS) 23.501 V18.0 clause 5.23.4 advises to apply the same QoS for 3GPP and non-3GPP access according to the specified MA-PDU QoS Flow. That will lead to a performance bottleneck on the remaining access if the other access of the MA-PDU session is not available and more data need to be delivered over the remaining access. A possible scenario might be setting a low QoS level if a MA-PDU session is connected over two accesses (3GPP and non-3GPP) and if for example the PMF (Performance Measurement Function) detects an outage of one access path, the MA-PDU session is provisioned for a higher QoS level.

Fig. 3 shows a block diagram of an example of a MA-PDU session. Fig. 3 shows an application 302 being executed on a UE 304 on the very left. From the UE 304 there are two communication paths, a first communication path uses 3GPP access 306 at the top, which optionally connects through interface N3 to User Plane Function (UPF) 308. The 3GPP access 306 offers a Radio Access Network (RAN) and connects to the UPF 308.

The UPF 308 is a component of the core network, e.g. in the New Radio (NR) mobile core infrastructure system as defined by 3GPP. Optionally, the UPF 308 handles the user data. In the signaling plane (not shown in Fig. 3) an Access and Mobility management Function (AMF) accesses the UE and the (R)AN. The reference point between the access 306 and the core network is called "NG". This reference point is constituted of several interfaces, e.g. N3.

More details of the UPF 308 can be found in 3GPP TS 23.501 (e.g. V16.17.0 (2023-06)). For example, the UPF 310 provides the interconnect point between the mobile infrastructure and the Data Network (DN, Server 312), i.e. encapsulation and decapsulation of GPRS Tunnelling Protocol for the user plane (GTPU). UPF 308 further provides a Protocol Data Unit (PDU) Session Anchor point (PSA) 310 for enabling mobility within and between Radio Access Technologies (RATs). The UPF (PSA) 310 is the protocol entity relevant for ATSSS as the 3GPP and the non-3GPP paths are terminated. Moreover, it provides per-flow QoS handling, including transport level packet marking for uplink (UL) and downlink (DL), rate limiting and reflective QoS (DiffServ Code Point, DSCP) marking on the DL. UPF (PSA) 310 is also shown in Fig. 3. The interface N9 lies between two UPF's (i.e. an Intermediate UPF 308 and the UPF Session Anchor 310). The UPF (PSA) 310 is then coupled via interface N6 to the server 312.

As further shown in Fig. 3, a second path at the bottom shows a non-3GPP access 314, for example, this may be a wired or a wireless access, e.g. WiFi-access (Wireless Fidelity). On the lower path, the non-3GPP access 314 is coupled to a non-3GPP InterWorking Function (N3IWF) 316. Details on the function of the N3IWF 316 can be found, for example, in 3GPP TS 24.502 V16.10.0 and later versions thereof. The N3IWF 316 enables a UE to establish a secure connection to the 5G core network over untrusted non-3GPP access. Another N3 interface optionally couples to the UPF 318. An N9 interface further couples to the UPF (PSA) 310. Fig. 3 further illustrates the MA-PDU 320 session, which comprises two paths 322 (via 3GPP access) and 324 (via non-3GPP access).

Fig. 3 depicts the principle of a MA-PDU session. Following Section 5.32.2 of TS 23.501 (v16.17.0) the establishment procedure is in large parts similar to the one of a traditional single access PDU session but defines instead the request type of the PDU session to be "MA PDU request" on the 3GPP and non-3GPP access using the same PDU Session ID (IDentification). This procedure is followed by an establishment of two N3/N9 tunnels (322, 324, one per access) within this MA-PDU session, which both can be used for NAS (Non-Access Stratum) communication and routing of traffic towards the N6 interface connecting to the server 312. The tunnels can be distinguished by the definition of the access type (3GPP or non-3GPP) defined during the first step of a PDU session establishment as defined in section 4.3.2.2 of TS 23.502. The usage and traffic distribution of the two tunnels is up to the selected ATSSS (Access Traffic Steering, Switching, and Splitting) steering function (section 5.32.6, TS 23.501) and steering mode (section 5.32.8, TS 23.501).

An ATSSS steering mode selection may be pre-set for a scheduler, assigning data packets to the different paths. In line with 3GPP TS 23.501 V16.17.0 (2023-06), section 5.32.8, ATSSS Rules may be communicated by a Session Management Function (SMF).

Each ATSSS rule may contain an Access Selection Descriptor that may contain the following components:
- A Steering Mode, which determines how the traffic of the matching SDF (Service Data Flow) should be distributed across 3GPP and non-3GPP accesses.

The following Steering Modes are supported:
- Active-Standby: It is used to steer an SDF on one access (the Active access), when this access is available, and to switch the SDF to the available other access (the Standby access), when Active access becomes unavailable. When the Active access becomes available again, the SDF is switched back to this access. If the Standby access is not defined, then the SDF is only allowed on the Active access and cannot be transferred on another access.
- Smallest Delay: It is used to steer an SDF to the access that is determined to have the smallest Round-Trip Time (RTT). As defined in clause 5.32.5 of 3GPP TS 23.501 V16.17.0 (2023-06), measurements may be obtained by the UE and UPF (User Plane Function) to determine the RTT over 3GPP access and over non-3GPP access. In addition, if one access becomes unavailable, all SDF traffic is switched to the other available access. It can only be used for the Non-GBR (Guaranteed Bit Rate) SDF.
- Load-Balancing: It is used to split an SDF across both accesses if both accesses are available. It contains the percentage of the SDF traffic that should be sent over 3GPP access and over non-3GPP access. Load-Balancing is only applicable to Non-GBR SDF. In addition, if one access becomes unavailable, all SDF traffic is switched to the other available access, as if the percentage of the SDF traffic transported via the available access was 100%.
- Priority-based: It is used to steer all the traffic of an SDF to the high priority access, until this access is determined to be congested. In this case, the traffic of the SDF is sent also to the low priority access, i.e. the SDF traffic is split over the two accesses. In addition, when the high priority access becomes unavailable, all SDF traffic is switched to the low priority access. How UE and UPF determine when a congestion occurs on an access is implementation dependent. It can only be used for the Non-GBR SDF.

The ATSSS rule may also contain a Steering Functionality, which identifies whether the MPTCP (Multi-Path Transmission Control Protocol) functionality or the ATSSS-LL functionality should be used to steer the traffic of the matching SDF. This is used when the UE supports multiple functionalities for ATSSS, as specified in clause 5.32.6 ("Support of Steering Functions") in TS 23.501 V16.17.0 (2023-06).

Similar to a single access PDU session, a MA-PDU session can carry QoS flows, which is further described in section 5.32.4 of TS 23.501 to be access agnostic:
One difference compared to the Single-Access PDU Session is that in a MA-PDU session there can be separate user-plane tunnels between the AN and the PSA, each one associated with a different access. However, the QoS Flow is conventionally not associated with specific access, i.e. it is access agnostic, so the same QoS is supported when the traffic is distributed over 3GPP and non-3GPP accesses. In a conventional system a session management function (SMF) shall provide the same QFI (QoS Flow Indicator) in 3GPP and non-3GPP accesses so that the same QoS is supported in both accesses.

A different concept will, for example, apply in the Hybrid Access scenario, where the availability of the fixed access leg controls the QoS value of the cellular PDU session. So, for example, the "iron" classification in the cellular network is released if fixed access is absent and applied if available.

For multi-path systems, which do not allow to control QoS across the whole transport chain a Network API (Application Programming Interface), e.g. a NEF (Network Exposure Function), can be used instead. Examples may then use a QoS adaptation engine to inform the Network API responsible for the part of the transport chain not under direct influence.

In an enhanced example the QoS level of the first path is modified according to the previous or anticipated QoS adaptations of the second path. The method 10 may then further comprise predicting QoS changes for the second communication path and adapting the provided QoS on the first communication path based on the predicted QoS change for the second communication path. This may have the advantage of avoiding signaling congestion, when QoS changes are expected at high frequency or potential resource conflict when a cell can be expected heavily loaded at a particular time.

In a further enhanced example, a manipulation of the second path is detected which aims to gain better QoS on the first path. For example, an MSAN or BNG measurement proves that the DSL (Digital Subscriber Line) copper cable works and provides this information to the detection or adaptation entity. The method 10 then further comprises detecting a manipulation of the second communication path and refraining from increasing a provided QoS on the first communication path if a manipulation of the second communication path is detected. This may have the benefit that, for example, the intended pulling out of the DSL cable is detected and avoids high QoS cellular or satellite usage.

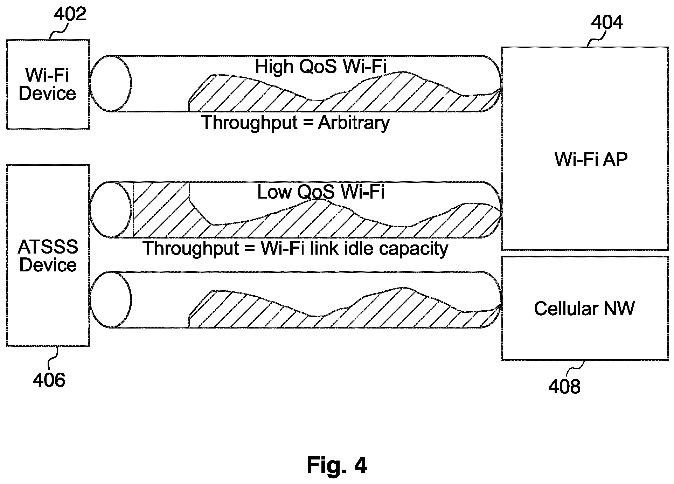

Fig. 4 shows throughput charts in an example of an MA-PDU session with concurrent use of a WiFi path. Fig. 4 illustrates a WiFi device 402 that communicates with a WiFi Access Point (AP) 404. In between the throughput is illustrated and it is assumed that a High QoS Wi-Fi context is established. At the bottom, an ATSSS device 406 is shown that has a MA-PDU session with the WiFi AP 404 and a cellular network 408. In between the two throughputs to the WiFi AP 404 and the cellular network 408 are illustrated. In this example, the multi-path communication session is an MA-PDU session, and the communication network is a 3rd Generation Partnership Project communication core network. For example, one of the communication nodes is user equipment, e.g. the ATSSS device 406.

Fig. 4 shows an ATSSS capable device 406 spanning a MA-PDU session across Wi-Fi and cellular access for traffic splitting and a Wi-Fi device 402 connected over Wi-Fi. In the case of the Wi-Fi device 402, the Wi-Fi QoS is set high and for the ATSSS device 406 low. The effect becomes visible when the ATSSS device 406 starts a transmission in the order of magnitude of the Wi-Fi link capacity and prefers to send the traffic via the Wi-Fi access. This occupies the whole Wi-Fi link until the time when the Wi-Fi device 402 starts a fluctuating transmission. Due to higher QoS, the Wi-Fi device 402 uses the resources of the Wi-Fi arbitrarily, which will lead to a reduced resource availability of the Wi-Fi for the MA-PDU session. Since the ATSSS splitting function can distribute traffic across links, the cellular link is then used to compensate the lower resource availability of the Wi-Fi. In an example, once the WiFi path becomes loaded the QoS profile for the cellular path of the ATSSS device 406 is reconfigured from "iron" to a higher class, for the cellular path to compensate for the decrease in transmission capacity on the WiFi path.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for maintaining Quality of Service, QoS, at an apparatus (20; 30) for maintaining QoS of a multi-path communication session between two communication nodes in a communication network (400), the multi-path communication session comprises at least first and second communication paths (26; 28), the method (10) comprising
monitoring (12) a provided QoS on the second communication path (28) using one or more processing devices (24, 34) of the apparatus (20; 30); and
adapting (14) a provided QoS on the first communication path (26) based on the provided QoS on the second communication path (28) using the one or more processing devices (24, 34) of the apparatus (20; 30),
wherein the adapting (14) of the provided QoS on the first communication path (26) comprises changing a QoS profile associated with the communication on the first communication path (26).

2. The method (10) of claim 1, wherein the first and second communication paths (26; 28) use different access technologies in the communication network (400).

3. The method (10) of one of the claims 1 or 2, wherein the first communication path (26) uses wireless access and wherein the second communication path (28) uses wired access.

4. The method (10) of one of the claims 1 or 2, wherein the first and second communication paths (26; 28) use different radio access technologies.

5. The method (10) of one of the preceding claims, wherein a QoS on the first communication path (26) is increased if the monitoring of the provided QoS on the second communication path (28) indicates that the second communication path (28) is interrupted.

6. The method (10) of claim 5, wherein a QoS on the first communication path (26) is decreased if the monitoring of the provided QoS on the second communication path (28) indicates that the second communication path (28) is available again after having been interrupted.

7. The method (10) of one of the preceding claims, further comprising
monitoring a provided QoS on the first communication path (26); and
adapting a provided QoS on the second communication path (28) based to the provided QoS on the first communication path (26).

8. The method (10) of one of the preceding claims, further comprising
monitoring a combined QoS provided via the first and second communication paths (26; 28); and
adapting individual QoS provided on the first and second communication paths (26; 28) based on the combined QoS.

9. The method (10) of one of the preceding claims, further comprising
predicting QoS changes for the second communication path (28); and
adapting the provided QoS on the first communication path (26) based on the predicted QoS change for the second communication path (28).

10. The method (10) of one of the preceding claims, wherein the multi-path communication session between the two communication nodes is a Multi-Access Packet Data Unit, MA-PDU, session in a 3^{rd} Generation Partnership Project Access Traffic Steering, Switching, and Splitting, ATSSS, system.

11. The method (10) of one of the preceding claims, wherein the multi-path communication session between the two communication nodes is a hybrid access system and/or an end-to-end multipath system.

12. The method (10) of one of the preceding claims, further comprising
detecting a manipulation of the second communication path (28); and
refraining from increasing a provided QoS on the first communication path (26) if a manipulation of the second communication path (28) is detected.

13. A computer program product having a program code for performing one of the methods (10) of one of the claims 1 to 12, when the computer program is executed on a computer, a processor, or a programmable hardware component.

14. An apparatus (20; 30) for maintaining Quality of Service, QoS, of a multi-path communication session between two communication nodes in a communication network (400), the multi-path communication session comprises at least first and second communication paths (26; 28), the apparatus (20; 30) comprising
one or more interfaces (22; 32) configured to communicate in the communication network (400); and
one or more processing devices (24, 34) configured to perform one of the methods (10) of claims 1 to 12.

## Patentansprüche

1. Ein Verfahren (10) zum Aufrechterhalten der Dienstgüte, QoS, an einer Vorrichtung (20; 30) zum Aufrechterhalten der QoS einer Mehrpfad-Kommunikationssitzung zwischen zwei Kommunikationsknoten in einem Kommunikationsnetzwerk (400), wobei die Mehrpfad-Kommunikationssitzung zumindest einen ersten und einen zweiten Kommunikationspfad (26; 28) umfasst, wobei das Verfahren (10) Folgendes umfasst
Überwachen (12) einer bereitgestellten QoS auf dem zweiten Kommunikationspfad (28) unter Verwendung einer oder mehrerer Verarbeitungsvorrichtungen (24, 34) der Vorrichtung (20; 30); und
Anpassen (14) einer bereitgestellten QoS auf dem ersten Kommunikationspfad (26) basierend auf der bereitgestellten QoS auf dem zweiten Kommunikationspfad (28) unter Verwendung der einen oder der mehreren Verarbeitungsvorrichtungen (24, 34) der Vorrichtung (20; 30),
wobei das Anpassen (14) der bereitgestellten QoS auf dem ersten Kommunikationspfad (26) ein Ändern eines QoS-Profils umfasst, das der Kommunikation auf dem ersten Kommunikationspfad (26) zugeordnet ist.

2. Das Verfahren (10) gemäß Anspruch 1, wobei der erste und der zweite Kommunikationspfad (26; 28) unterschiedliche Zugangstechnologien in dem Kommunikationsnetzwerk (400) verwenden.

3. Das Verfahren (10) gemäß einem der Ansprüche 1 oder 2, wobei der erste Kommunikationspfad (26) drahtlosen Zugang verwendet und wobei der zweite Kommunikationspfad (28) drahtgebundenen Zugang verwendet.

4. Das Verfahren (10) gemäß einem der Ansprüche 1 oder 2, wobei der erste und der zweite Kommunikationspfad (26; 28) unterschiedliche Funkzugangstechnologien verwenden.

5. Das Verfahren (10) gemäß einem der vorhergehenden Ansprüche, wobei eine QoS auf dem ersten Kommunikationspfad (26) erhöht wird, wenn das Überwachen der bereitgestellten QoS auf dem zweiten Kommunikationspfad (28) anzeigt, dass der zweite Kommunikationspfad (28) unterbrochen ist.

6. Das Verfahren (10) gemäß Anspruch 5, wobei eine QoS auf dem ersten Kommunikationspfad (26) verringert wird, wenn das Überwachen der bereitgestellten QoS auf dem zweiten Kommunikationspfad (28) anzeigt, dass der zweite Kommunikationspfad (28) wieder verfügbar ist, nachdem er unterbrochen wurde.

7. Das Verfahren (10) gemäß einem der vorhergehenden Ansprüche, ferner umfassend
Überwachen einer bereitgestellten QoS auf dem ersten Kommunikationspfad (26); und
Anpassen einer bereitgestellten QoS auf dem zweiten Kommunikationspfad (28) basierend auf der bereitgestellten QoS auf dem ersten Kommunikationspfad (26).

8. Das Verfahren (10) gemäß einem der vorhergehenden Ansprüche, ferner umfassend
Überwachen einer kombinierten QoS, die über den ersten und den zweiten Kommunikationspfad (26; 28) bereitgestellt wird; und
Anpassen individueller QoS, die auf dem ersten und dem zweiten Kommunikationspfad (26; 28) bereitgestellt werden, basierend auf der kombinierten QoS.

9. Das Verfahren (10) gemäß einem der vorhergehenden Ansprüche, ferner umfassend
Vorhersagen von QoS-Änderungen für den zweiten Kommunikationspfad (28); und
Anpassen der bereitgestellten QoS auf dem ersten Kommunikationspfad (26) basierend auf der vorhergesagten QoS-Änderung für den zweiten Kommunikationspfad (28).

10. Das Verfahren (10) gemäß einem der vorhergehenden Ansprüche, wobei die Mehrpfad-Kommunikationssitzung zwischen den zwei Kommunikationsknoten eine Multi-Access Packet Data Unit, MA-PDU, -Sitzung in einem 3^{rd} Generation Partnership Project Access Traffic Steering, Switching, and Splitting, ATSSS, - System ist.

11. Das Verfahren (10) gemäß einem der vorhergehenden Ansprüche, wobei die Mehrpfad-Kommunikationssitzung zwischen den zwei Kommunikationsknoten ein hybrides Zugangssystem und/oder ein Ende-zu-Ende-Mehrpfadsystem ist.

12. Das Verfahren (10) gemäß einem der vorhergehenden Ansprüche, ferner umfassend
Detektieren einer Manipulation des zweiten Kommunikationspfads (28); und
Unterlassen des Erhöhens einer bereitgestellten QoS auf dem ersten Kommunikationspfad (26), wenn eine Manipulation des zweiten Kommunikationspfads (28) detektiert wird.

13. Ein Computerprogrammprodukt mit einem Programmcode zum Durchführen eines der Verfahren (10) gemäß einem der Ansprüche 1 bis 12, wenn das Computerprogramm auf einem Computer, einem Prozessor oder einer programmierbaren Hardwarekomponente ausgeführt wird.

14. Eine Vorrichtung (20; 30) zum Aufrechterhalten der Dienstgüte, QoS, einer Mehrpfad-Kommunikationssitzung zwischen zwei Kommunikationsknoten in einem Kommunikationsnetzwerk (400), wobei die Mehrpfad-Kommunikationssitzung zumindest einen ersten und einen zweiten Kommunikationspfad (26; 28) umfasst, wobei die Vorrichtung (20; 30) Folgendes umfasst
eine oder mehrere Schnittstellen (22; 32), die konfiguriert sind, um in dem Kommunikationsnetzwerk (400) zu kommunizieren; und
eine oder mehrere Verarbeitungsvorrichtungen (24, 34), die konfiguriert sind, um eines der Verfahren (10) gemäß den Ansprüchen 1 bis 12 durchzuführen.

## Revendications

1. Procédé (10) pour maintenir une qualité de service, QoS, au niveau d'un appareil (20 ; 30) pour maintenir une QoS d'une session de communication à trajets multiples entre deux nœuds de communication dans un réseau de communication (400), la session de communication à trajets multiples comprenant au moins des premier et deuxième trajets de communication (26 ; 28), le procédé (10) comprenant le fait de
surveiller (12) une QoS fournie sur le deuxième trajet de communication (28) en utilisant un ou plusieurs dispositifs de traitement (24, 34) de l'appareil (20 ; 30) ; et
adapter (14) une QoS fournie sur le premier trajet de communication (26) sur la base de la QoS fournie sur le deuxième trajet de communication (28) en utilisant le ou les dispositifs de traitement (24, 34) de l'appareil (20 ; 30),
dans lequel le fait d'adapter (14) la QoS fournie sur le premier trajet de communication (26) comprend le fait de changer un profil de QoS associé à la communication sur le premier trajet de communication (26).

2. Procédé (10) selon la revendication 1, dans lequel les premier et deuxième trajets de communication (26 ; 28) utilisent des technologies d'accès différentes dans le réseau de communication (400).

3. Procédé (10) selon l'une des revendications 1 ou 2, dans lequel le premier trajet de communication (26) utilise un accès sans fil et dans lequel le deuxième trajet de communication (28) utilise un accès filaire.

4. Procédé (10) selon l'une des revendications 1 ou 2, dans lequel les premier et deuxième trajets de communication (26 ; 28) utilisent des technologies d'accès radio différentes.

5. Procédé (10) selon l'une des revendications précédentes, dans lequel une QoS sur le premier trajet de communication (26) est augmentée si la surveillance de la QoS fournie sur le deuxième trajet de communication (28) indique que le deuxième trajet de communication (28) est interrompu.

6. Procédé (10) selon la revendication 5, dans lequel une QoS sur le premier trajet de communication (26) est diminuée si la surveillance de la QoS fournie sur le deuxième trajet de communication (28) indique que le deuxième trajet de communication (28) est à nouveau disponible après avoir été interrompu.

7. Procédé (10) selon l'une des revendications précédentes, comprenant en outre le fait de
surveiller une QoS fournie sur le premier trajet de communication (26) ; et
adapter une QoS fournie sur le deuxième trajet de communication (28) sur la base de la QoS fournie sur le premier trajet de communication (26).

8. Procédé (10) selon l'une des revendications précédentes, comprenant en outre le fait de
surveiller une QoS combinée fournie par l'intermédiaire des premier et deuxième trajets de communication (26 ; 28) ; et
adapter des QoS individuelles fournies sur les premier et deuxième trajets de communication (26 ; 28) sur la base de la QoS combinée.

9. Procédé (10) selon l'une des revendications précédentes, comprenant en outre le fait de
prédire des changements de QoS pour le deuxième trajet de communication (28) ; et
adapter la QoS fournie sur le premier trajet de communication (26) sur la base du changement de QoS prédit pour le deuxième trajet de communication (28).

10. Procédé (10) selon l'une des revendications précédentes, dans lequel la session de communication à trajets multiples entre les deux nœuds de communication est une session d'unité de données en paquets à accès multiples, MA-PDU, dans un système d'orientation, de commutation et de répartition de trafic d'accès de projet de partenariat de 3^{e} génération, ATSSS.

11. Procédé (10) selon l'une des revendications précédentes, dans lequel la session de communication à trajets multiples entre les deux nœuds de communication est un système d'accès hybride et/ou un système à trajets multiples de bout en bout.

12. Procédé (10) selon l'une des revendications précédentes, comprenant en outre le fait de
détecter une manipulation du deuxième trajet de communication (28) ; et
s'abstenir d'augmenter une QoS fournie sur le premier trajet de communication (26) si une manipulation du deuxième trajet de communication (28) est détectée.

13. Produit de programme informatique ayant un code de programme pour réaliser l'un des procédés (10) selon l'une des revendications 1 à 12, lorsque le programme informatique est exécuté sur un ordinateur, un processeur ou un composant matériel programmable.

14. Appareil (20 ; 30) pour maintenir une qualité de service, QoS, d'une session de communication à trajets multiples entre deux nœuds de communication dans un réseau de communication (400), la session de communication à trajets multiples comprenant au moins des premier et deuxième trajets de communication (26 ; 28), l'appareil (20 ; 30) comprenant
une ou plusieurs interfaces (22 ; 32) configurées pour communiquer dans le réseau de communication (400) ; et
un ou plusieurs dispositifs de traitement (24, 34) configurés pour réaliser l'un des procédés (10) selon les revendications 1 à 12.
